# EUROPÄISCHE PATENTSCHRIFT

(11) **EP 1 991 450 B1**
(45) Veröffentlichungstag und Bekanntmachung des Hinweises auf die Patenterteilung: **21.04.2010**
(21) Anmeldenummer: 07711806.5
(22) Anmeldetag: 06.03.2007
(51) Int. Cl.: B60S 1/08, B60R 11/04

(54) **KAMERAANORDNUNG FÜR EIN KRAFTFAHRZEUG**
CAMERA ARRANGMENT FOR A MOTOR VEHICLE
ENSEMBLE CAMÉRA POUR VÉHICULE À MOTEUR

(30) Priorität: 08.03.2006 DE 102006010671
(43) Veröffentlichungstag der Anmeldung: 19.11.2008
(73) Patentinhaber: Leopold Kostal GmbH & Co. KG, 58507 Lüdenscheid (DE)
(72) Erfinder: BLÄSING, Frank, 59457 Werl (DE); BÖBEL, Ralf, 59439 Holzwickede (DE); BÖHNE, Gregor, 44575 Castrop-Rauxel (DE); RICHWIN, Matthias, 44289 Dortmund (DE); WEBER, Thomas, 58513 Lüdenscheid (DE)
(86) Internationale Anmeldenummer: PCT/EP2007/001899
(87) Internationale Veröffentlichungsnummer: WO 2007/101651

(56) Entgegenhaltungen:
- EP-A- 1 536 204
- DE-A1- 10 355 205
- DE-A1-102004 015 040
- US-A1- 2004 200 948

## Beschreibung

Die vorliegende Erfindung betrifft eine Kameraanordnung für ein Kraftfahrzeug, mit einer auf eine Fahrzeugscheibe gerichteten Kamera, die ein Bild des Außenbereichs der Fahrzeugscheibe erfaßt, und die weiterhin die Intensität einer von der Fahrzeugscheibe reflektierten Strahlung einer Lichtquelle erfaßt, wobei ein an der Fahrzeugscheibe angeordneter Lichtleitkörper die Strahlung der Lichtquelle in die Fahrzeugscheibe ein- und aus der Fahrzeugscheibe auskoppelt.

Die Kameraanordnung soll damit zugleich sowohl eine bilderfassende als auch einen intensitätserfassende Funktion aufweisen. Die bilderfassende Funktion kann beispielsweise zur optischen Darstellung des Fahrzeugumfelds dienen, während die intensitätserfassende Funktion vorzugsweise zur Ausbildung eines optischen Feuchtigkeitssensors vorgesehen sein kann.

Aus der deutschen Patentanmeldung DE 10 2004 015 040 A1 ist eine Kamera bekannt, die in horizontaler Richtung eine Fahrzeugscheibe durchblickt. Zur Ausbildung einer Regensensorfunktion wird vorgeschlagen, das Licht einer Lichtquelle über ein Einkoppelelement in die Fahrzeugscheibe einzukoppeln. Das Licht wird innerhalb der Fahrzeugscheibe mehrfach totalreflektiert und dann über ein an der Fahrzeugscheibe angeordnetes Auskoppelelement aus der Fahrzeugscheibe ausgekoppelt und auf einen, nicht zur Bilderfassung vorgesehenen Teil des Kamerasensors gelenkt. Streulicht aus dem Außenbereich wird von diesem Teil des Kamerasensors durch eine eigens hierfür vorgesehene Blende abgehalten. Als Weiterbildung wird vorgeschlagen, daß Ein- und Auskoppelelement als Strahlenleitkörper eine Einheit bilden können. In diesem Dokument wird nicht offenbart, wie eine Kamera mit einem derartigen Strahlenleitkörper vorteilhaft zu realisieren wäre.

Es stellte sich die Aufgabe, eine Kameraanordnung für ein Kraftfahrzeug zu schaffen, die sich durch einen besonders einfachen Aufbau und eine verbesserte Funktionsweise auszeichnet.

Diese Aufgabe wird erfindungsgemäß dadurch gelöst, daß die Kamera das Bild des Außenbereichs durch denselben Lichtleitkörper aufnimmt.

Die erfindungsgemäße Kameraanordnung weist einen Lichtleitkörper auf, der, im Gegensatz zum Stand der Technik, nicht nur als Ein- und Auskoppelelement für eine lichtintensitätserfassende Funktion der Kamera dient, sondern zugleich einen Teil der Optik für die bilderfassende Funktion der Kamera bildet.

Die Kameraanordnung kann die Erfassungsbereiche des Kamerasensors für die bilderfassende und die intensitätserfassende Kamerafunktion ohne weiteren Aufwand trennen. Außerdem wird eine zusätzliche Blende als Streulichtschutz für die intensitätserfassende Funktion nicht mehr benötigt. Darüber hinaus ermöglicht der Lichtleitkörper eine verbesserte Lichteinkopplung in die Fahrzeugscheibe und damit eine verbesserte Feuchtigkeitserkennung.

Vorteilhafte Ausgestaltungen und Weiterbildungen der Erfindung sind in den abhängigen Ansprüchen und der nachfolgenden Figurenbeschreibung aufgeführt. Im folgenden wird die Erfindung anhand einer skizzenhaften Zeichnung dargestellt und näher erläutert. Es zeigen
- Figur 1: ein erstes Ausführungsbeispiel einer Kameraanordnung in einer Schnittdarstellung,
- Figur 2: ein von einer Kameraanordnung erfaßtes Bild,
- Figur 3: eine zweites Ausführungsbeispiel einer Kameraanordnung.

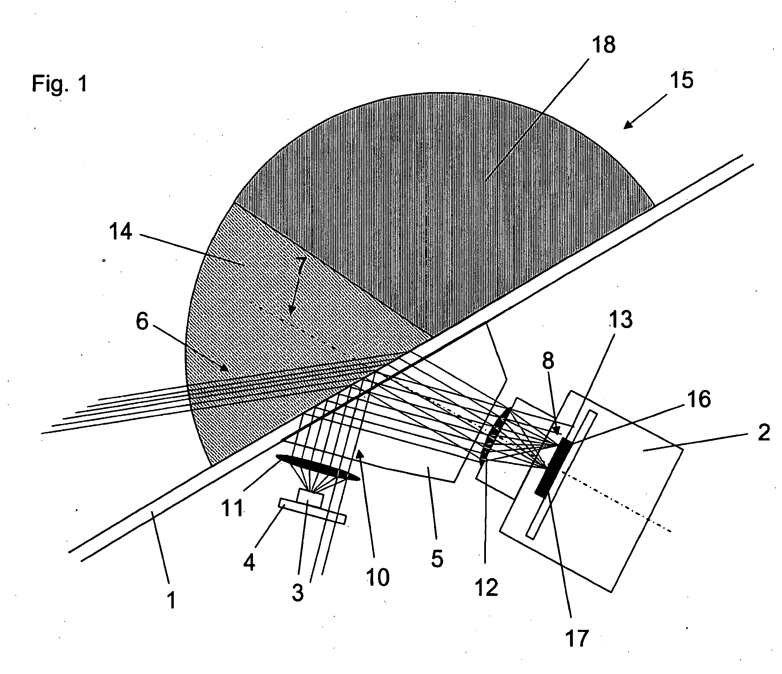

Die Figur 1 zeigt eine erfindungsgemäße Kameraanordnung, bei der die Kamera eine kombinierte bilderfassende und intensitätserfassende Funktion realisiert.

An die Innenseite einer Fahrzeugscheibe (1), und zwar insbesondere der Windschutzscheibe eines Kraftfahrzeugs, ist eine äußere Fläche eines Lichtleitkörpers (5) angekoppelt. Mit dem der Fläche entgegengesetzten Abschnitt des Lichtleitkörpers (5) ist eine Kamera (2) verbunden. Vorteilhafterweise können hierbei in einer hier nicht dargestellten Weise Teile des Lichtleitkörpers (5) einstückig Teile der Kameraoptik (12) ausbilden. Die Kamera (2) besitzt intern einen bildauflösenden Sensor, nachfolgend kurz als Kamerachip (13) bezeichnet, dessen Oberfläche die Abbildungsebene (8) der Kamera (2) bildet.

Die Abbildungsebene (8) der Kamera (2) liegt in der Brennebene der Kameraoptik (12), wodurch die Kamera (2) ins Unendliche fokussiert ist. Daraus folgt, daß ein parallel einfallendes Lichtbündel (10, 6) in einem Punkt (16,17) der Abbildungsebene (8) abgebildet wird.

Der Lichtleitkörper (5) ist aus dem gleichen Material oder aus einem Material mit einem ähnlichen Brechungsindex wie die Fahrzeugscheibe (1) gefertigt und ermöglicht daher einen nahezu brechungsfreien Strahlengang von der Fahrzeugscheibe (1) zum Lichtleitkörper (5) und zur Kamera (2). Der hier nur schematisch dargestellte Lichtleitkörper (5) kann durch einen festen Prismenkörper gebildet sein oder auch durch einen Tubus, der mit einem optisch transparenten Material gefüllt ist.

An der Unterseite des Lichtleitkörpers (5) ist eine Lichtquelle (3), vorzugsweise ausgeführt als Infrarot-LED, angeordnet, die über eine Linse (11) ein paralleles Lichtbündel (10) in die untere Außenfläche des Lichtleitkörpers (5) einkoppelt. Die Linse (11) kann hierbei auch einstückig mit dem Lichtleitkörper (5) ausgebildet sein. Über den Lichtleitkörper (5) wird das Lichtbündel (10) brechungsfrei in die Fahrzeugscheibe (1) geführt und zwar unter einem Winkel, der größer als der Grenzwinkel der Totalreflexion ist. Von dort wird das Lichtbündel (10) durch eine einfache Totalreflexion in die Richtung der Objektivöffnung der Kamera (2) gelenkt.

Befindet sich Feuchtigkeit auf der Fahrzeugscheibe (1), so wird ein Teil des von der Lichtquelle (3) kommenden Lichts zur Außenseite der Fahrzeugscheibe (1) ausgekoppelt, wodurch sich der in Richtung auf die Kamera (2) totalreflektierte Anteil vermindert. Entsprechend verringert sich die von der Kamera (2) erfaßte Lichtintensität gegenüber der erfaßten Intensität bei einer trockenen Fahrzeugscheibe (1). Die Kamera (2) kann hierdurch eine Benetzung der Fahrzeugscheibe (1) erkennen und damit einen Beschlags- oder einen Regensensor ausbilden.

Durch die Ausformung der Linse (11) wird ein Bereich der Fahrzeugscheibe (1) beleuchtet, in dem Feuchtigkeit auf der Fahrzeugscheibe (1) erfaßt werden kann. Je größer der ausgeleuchtete Bereich der Fahrzeugscheibe (1) ist, umso größer ist die Wahrscheinlichkeit, daß ein Regentropfen erfaßt wird. Gleichzeitig sinkt jedoch die Signaländerung, die z. B. durch einen einzelnen Regentropfen hervorgerufen wird. Vorteilhafterweise werden daher mehrere Lichtquellen (3) mit einer oder mehreren Linsen (11) verwendet. Die Lichtquellen (3) werden dann auf verschiedene Pixelgruppen des Kamerachips (13) abgebildet. Dadurch erhält man sowohl einen ausreichend großen ausgeleuchteten Bereich der Fahrzeugscheibe (1) als auch ausreichend große Signaländerungen beim Auftreten von Feuchtigkeit.

Der Beleuchtungsbereich der Lichtquelle (3) auf der Fahrzeugscheibe (1) darf sich dabei sogar mit dem Bereich der Fahrzeugscheibe (1) überschneiden, durch den die Kamera (2) das Bild des Außenbereichs erfaßt. Wie nachfolgend gezeigt wird, beeinflussen sich die beiden Funktionen der Kamera (2) dabei nicht.

Es kann alternativ auch vorgesehen sein, daß die Lichtquelle (3) statt eines parallelen Lichtbündels (10) auch konvergentes oder divergentes Licht in den Lichtleitkörper (5) einkoppelt. Hierdurch gelangt von der Fahrzeugscheibe (1) unter unterschiedlichen Winkeln totalreflektiertes Licht zur Kamera, wodurch sich der Bildpunkt (16) in der Abbildungsebene der Kamera (2) entsprechend verbreitert.

Licht, welches von der Außenseite der Fahrzeugscheibe (1) einfällt, wird von der Kamera (2) bildgebend erfaßt. In der Figur 1 ist das Blickfeld (14) der Kamera (2) als eine erste schraffierte Fläche dargestellt. Der Lichtleitkörper (5) bewirkt durch die brechungsfreie Ankopplung an die Fahrzeugscheibe (1), daß die durch die Fahrzeugscheibe (1) durch Brechung hervorgerufene Lichtablenkung erhalten bleibt. Daraus ergibt sich im Außenbereich (15) der Fahrzeugscheibe (1) ein Blickfeld (14) der Kamera (2), wobei der Erfassungsbereich der Kamera (2) zumindest aus einer Richtung streifend auf die Fahrzeugscheibe (1) fallendes Licht umfaßt.
In der Figur 1 ist beispielhaft der Strahlengang eines aus dem Außenbereich (15) der Fahrzeugscheibe (1) einfallenden parallelen Lichtbündels (6) dargestellt. Das Lichtbündel (6) läuft nach der Brechung beim Eintritt in die Fahrzeugscheibe (1) geradlinig weiter und wird durch die Kameraoptik (12) in einem Punkt (17) der Abbildungsebene (8) abgebildet. Die Gesamtheit aller aus dem Außenbereich einfallenden Lichtbündel (6) wird in der Abbildungsebene (8) der Kamera (2) zu einem Bild (19) des Außenbereichs vereinigt.

Die laterale Lage eines Bildpunktes (17) in der Abbildungsebene (8) hängt dabei nur von der Einfallsrichtung des Lichtbündels (6) ab. Dabei kann der Erfassungsbereich der Kamera (2) durchaus so groß sein, daß das gesamte Blickfeld (14) nur auf einem Teil der optischen Sensorfläche des Kamerachips (13) abgebildet wird. Daraus folgt, daß auch Licht unter einem Einfallswinkel jenseits des streifenden Lichteinfalls von der Kamera (2) erfaßt werden kann, was einem Lichteinfall von Innenseite der Fahrzeugscheibe (1) entspricht.

Dieser zusätzlich durch die Kamera (2) erfaßbare Winkelbereich wird hier durch die Lichtquelle (3) zur Realisierung des Feuchtigkeitssensors genutzt. Da sich somit der Einstrahlungswinkel der Lichtquelle (3) an den durch das äußere Blickfeld (14) gebildeten Winkelbereich anschließt, ergibt sich, daß sich auch der Abbildungsbereich der Lichtquelle (3) in der Abbildungsebene (8) der Kamera (2) lateral an den Abbildungsbereich des Außenbereichs (15) überschneidungsfrei anschließt.

Vorteilhafterweise werden die beiden Bereiche durch verschiedene Einstellungen der Kamera (2) erfasst. In einer ersten Aufnahme werden die Einstellungen der Kamera (2) für die Erfassung des Außenbereiches optimal eingestellt, die Lichtquelle (3) bleibt dabei ausgeschaltet. Eventuell auftretendes Streulicht von der Lichtquelle kann so die Erfassung des Außenbereiches nicht stören. In einer zweiten Aufnahme wird die Lichtquelle (3) sehr hell eingeschaltet und die Einstellungen der Kamera (2) auf diese hohe Helligkeit angepasst. Eventuell auftretendes Streulicht aus dem ggf. sehr hellen Außenbereich kann dann die Erfassung des Lichtes der Lichtquelle (3) nur unwesentlich stören.

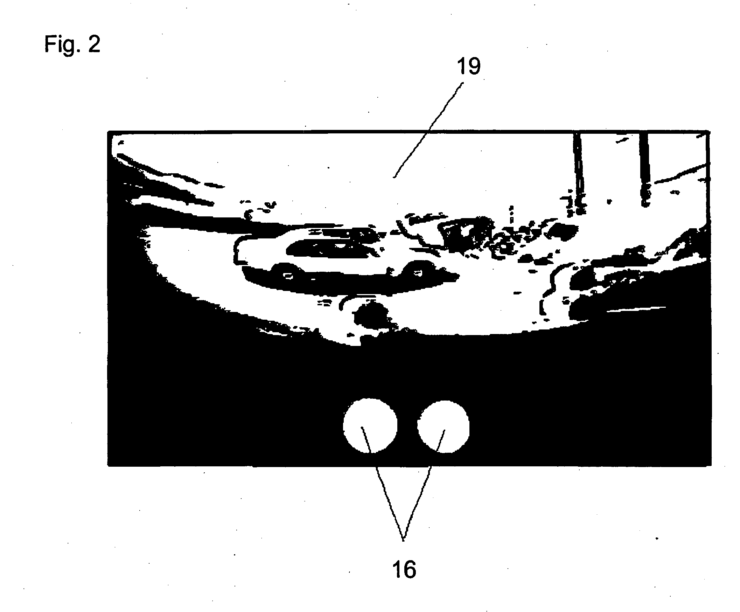

Dies verdeutlicht das in der Figur 2 dargestellte beispielhafte Kamerabild, welches allerdings aus drucktechnischen Gründen hier auf eine schwarzweiße Darstellung reduziert wurde. Selbstverständlich ist ein reales, zumindest Graustufen darstellendes Kamerabild wesentlich detailreicher als die hier dargestellte Prinzipskizze.

Im oberen Bereich ist das Bild (19) des von der Kamera erfaßten Außenbereich des Fahrzeugs erkennbar; im unteren Bereich sind die etwas aufweiteten Bildpunkte (16) zweier Lichtquellen dargestellt. Die Bildpunkte (16) werden durch eine nicht dargestellte Auswertevorrichtung, die insbesondere auch Bestandteil der Kamera sein kann, hinsichtlich ihrer Intensität oder hinsichtlich von Intensitätsänderungen ausgewertet und beispielsweise zur Steuerung einer Scheibenwischvorrichtung verwendet.

Das Bild (19) des Außenbereichs weist eine durch den Lichtleitkörper bewirkte Verzerrung auf. Diese Bildverzerrung kann, insbesondere zur Darstellung des erfaßten Bildes (19) auf einem Bildschirm, wiederum durch eine Auswertevorrichtung leicht ausgeglichen werden.

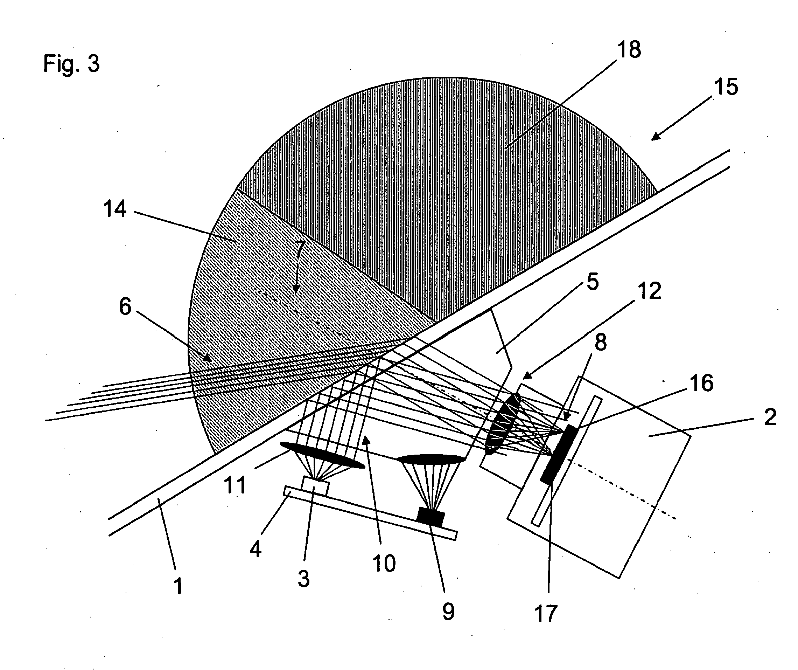

Wie beschrieben, ist die bildgebende Erfassung des Außenbereichs (15) auf den Blickwinkel (14) der Kamera (2) beschränkt. Aus dem danebenliegenden, zweiten schraffiert dargestellten Bereich (18) des Halbraums über der Fahrzeugscheibe (1) kann kein Licht zur Kamera (2) gelangen. Wie die Figur 3 zeigt, kann Licht aus diesem Bereich aber über den Lichtleitkörper (5) auf einen weiteren optischen Sensor geleitet werden, der als Umgebungslichtsensor (9) die Helligkeit des Bereichs (18) des Außenbereichs (15) erfaßt.

Vorteilhafterweise kann der Umgebungslichtsensor (9) zusammen mit der Lichtquelle (3) auf einem gemeinsamen Schaltungsträger (4) angeordnet sein. In einer bevorzugten Ausführungsform bilden die Lichtquelle (3), der Schaltungsträger (4) und/oder der Umgebungslichtsensor (9) zusammen mit dem Lichtleitkörper (5) eine gemeinsame Baueinheit.

### Bezugszeichen

- 1: Fahrzeugscheibe
- 2: Kamera
- 3: Lichtquelle
- 4: Schaltungsträger
- 5: Lichtleitkörper
- 6: Lichtbündel
- 7: optische Achse
- 8: Abbildungsebene
- 9: Umgebungslichtsensor
- 10: paralleles Lichtbündel (von der Lichtquelle)
- 11: Linse
- 12: Kameraoptik
- 13: Kamerachip
- 14: Blickfeld
- 15: Außenbereich
- 16: (Bild)punkt
- 17: (Bild)punkt
- 18: Abschnitt (des Außenbereichs)
- 19: Bild (des Außenbereichs)

## Patentansprüche

1. Kameraanordnung für ein Kraftfahrzeug, mit einer auf eine Fahrzeugscheibe (1) gerichteten Kamera (2), die ein Bild (19) des Außenbereichs (15) auf der der Kamera (2) abgewandten Seite der Fahrzeugscheibe (1) erfaßt, und die weiterhin die Intensität einer an der Grenzfläche zwischen Fahrzeugscheibe (1) und Außenbereich (15) reflektierten Strahlung einer Lichtquelle erfaßt, wobei ein an der Fahrzeugscheibe angeordneter Lichtleitkörper die Strahlung der Lichtquelle in die Fahrzeugscheibe ein- und aus der Fahrzeugscheibe auskoppelt,
**dadurch gekennzeichnet,**
**daß** die Kamera (2) das Bild des Außenbereichs (15) durch den selben Lichtleitkörper (5) aufnimmt.

2. Kameraanordnung nach Anspruch 1, **dadurch gekennzeichnet, daß** der Lichtleitkörper (5) als Prisma ausgebildet ist.

3. Kameraanordnung nach Anspruch 1, **dadurch gekennzeichnet, daß** der Lichtleitkörper (5) durch einen, mit einem optisch wirksamen Material gefüllten Tubus gebildet ist.

4. Kameraanordnung nach Anspruch 1, **dadurch gekennzeichnet, daß** die Lichtquelle (3) ein paralleles Lichtbündel (10) in den Lichtleitkörper (5) einstrahlt.

5. Kameraanordnung nach Anspruch 4, **dadurch gekennzeichnet, daß** das parallele Lichtbündel (10) an der Fahrzeugscheibe (1) totalreflektiert wird.

6. Kameraanordnung nach Anspruch 1, **dadurch gekennzeichnet, daß** die Lichtquelle (3) konvergentes oder divergentes Licht in den Lichtleitkörper (5) einstrahlt.

7. Kameraanordnung nach Anspruch 1, **dadurch gekennzeichnet, daß** die Erfassungsbereiche für das Bild des Außenbereichs (15) und für die Strahlung der Lichtquelle (3) in der Abbildungsebene (8) der Kamera (2) überschneidungsfrei nebeneinander liegen.

8. Kameraanordnung nach Anspruch 1, **dadurch gekennzeichnet, daß** sich das Blickfeld (14) der bilderfassenden Funktion der Kamera (2) auf der Fahrzeugscheibe (1) und der Totalreflexionsbereich auf der Außenseite der Fahrzeugscheibe (1) zumindest teilweise überschneiden.

9. Kameraanordnung nach Anspruch 1, **dadurch gekennzeichnet, daß** die Kamera (2) auf eine Ebene fokussiert ist, die außerhalb des Kraftfahrzeugs liegt.

10. Kameraanordnung nach Anspruch 1, **dadurch gekennzeichnet, daß** ein von der Kamera (2) unabhängiger Umgebungslichtsensor (9) vorgesehen ist, der über den Lichtleitkörper (5) Licht aus einem Außenbereich (15) der Fahrzeugscheibe (1) aufnimmt, der nicht im Blickfeld (14) der bilderfassenden Funktion der Kamera (2) liegt.

11. Kameraanordnung nach Anspruch 10, **dadurch gekennzeichnet, daß** der Umgebungslichtsensor (9) mit der Lichtquelle (3) eine Baueinheit bildet und/oder auf einem gemeinsamen Schaltungsträger (4) angeordnet ist.

12. Kameraanordnung nach Anspruch 1, **dadurch gekennzeichnet, daß** zumindest die Lichtquelle (3) und der Lichtleitkörper (5) miteinander eine Baueinheit bilden.

13. Kameraanordnung nach Anspruch 1, **dadurch gekennzeichnet, daß** der Lichtleitkörper (5) einen ähnlichen Brechungsindex wie die Fahrzeugscheibe (1) aufweist und vorzugsweise aus dem gleichen Material besteht.

14. Kameraanordnung nach Anspruch 1, **dadurch gekennzeichnet, daß** der Lichtleitkörper (5) einstückig mit der Fahrzeugscheibe (1) und/oder mit Teilen der Kameraoptik (12) ausgeführt ist.

15. Kameraanordnung nach Anspruch 1, **dadurch gekennzeichnet, daß** eine Auswertevorrichtung das von der Kamera (2) erfaßte Bild entzerrt.

## Claims

1. Camera arrangement for a motor vehicle, with a camera (2) which is directed at a window (1) of a motor vehicle and records an image (19) of the external zone (15) on the face of the car window (1) facing away from the camera (2) and which also records the intensity of a radiation from a light source reflected on the boundary area between the car window (1) and the external zone (15), wherein a light guiding element arranged on the window of the vehicle couples the radiation of the light source into the car window in and out of the car window,
**characterised in that**
the camera (2) captures the image of the external zone (15) by way of the same light guiding element (5).

2. Camera arrangement in accordance with Claim 1, **characterised in that** the light guiding element (5) is designed as a prism.

3. Camera arrangement in accordance with Claim 1, **characterised in that** the light guiding element (5) is constituted by a tube filled with an optically effective material.

4. Camera arrangement in accordance with Claim 1, **characterised in that** the light source (3) irradiates a parallel light beam (10) into the light guiding element (5).

5. Camera arrangement in accordance with Claim 4, **characterised in that** the parallel light beam (10) is totally reflected on the window (1) of the vehicle.

6. Camera arrangement in accordance with Claim 1, **characterised in that** the light source (3) irradiates convergent or divergent light into the light guiding element (5).

7. Camera arrangement in accordance with Claim 1, **characterised in that** the coverage ranges for the image of the external zone (15) and for the radiation of the light source (3) lie adjacent to each other in the imaging plane (8) of the camera (2) without intersecting.

8. Camera arrangement in accordance with Claim 1, **characterised in that** the range of vision (14) of the image capturing function of the camera (2) on the window (1) of the vehicle intersect at least partially with the total reflection zone on the outer surface of the window (1) of the vehicle.

9. Camera arrangement in accordance with Claim 1, **characterised in that** the camera (2) is focused on a plane that lies outside the motor vehicle.

10. Camera arrangement in accordance with Claim 1, **characterised in that** an ambient light sensor (9) is provided which is independent of the camera (2) and, by way of the light guiding element (5), absorbs light from an external zone (15) of the window (1) of the vehicle which does not lie within the range of vision (14) of the image capturing function of the camera (2).

11. Camera arrangement in accordance with Claim 10, **characterised in that** the ambient light sensor (9) forms a structural unit together with the light source (3) and/or is arranged on a common circuit board (4).

12. Camera arrangement in accordance with Claim 1, **characterised in that** at least the light source (3) and the light guiding element (5) form a structural unit with each other.

13. Camera arrangement in accordance with Claim 1, **characterised in that** the light guiding element (5) has a similar refractive index to the window (1) of the vehicle and preferably consists of the same material.

14. Camera arrangement in accordance with Claim 1, **characterised in that** the light guiding element (5) is designed in one piece with the window (1) of the vehicle and/or with parts of the camera lens (12).

15. Camera arrangement in accordance with Claim 1, **characterised in that** an evaluating device equalises the image captured by the camera (2).

## Revendications

1. Système de caméra pour un véhicule automobile avec une caméra (2), qui, dirigée sur une glace (1) du véhicule automobile, capte une image (19) de la zone extérieure (15) sur le côté opposé de la caméra (2), et qui capte en outre l'intensité d'un rayonnement d'une source de lumière, qui est réfléchi sur la surface limite entre la glace du véhicule automobile (1) et la zone extérieure (15), un conducteur optique, installé sur la glace du véhicule automobile (1), couplant le rayonnement de la source de lumière dans la glace du véhicule automobile et le découplant hors de la glace du véhicule automobile,
**caractérisé en ce que**
la caméra (2) capte l'image de la zone extérieure (15) par le même conducteur optique (5).

2. Système de caméra selon la revendication 1, **caractérisé en ce que** le conducteur optique (5) est réalisé sous la forme d'un prisme.

3. Système de caméra selon la revendication 1, **caractérisé en ce que** le conducteur optique (5) est formé par un tube, rempli d'une matière optiquement active.

4. Système de caméra selon la revendication 1, **caractérisé en ce que** la source de lumière (3) irradie un faisceau lumineux parallèle (10) dans le conducteur optique (5).

5. Système de caméra selon la revendication 4, **caractérisé en ce que** le faisceau lumineux parallèle (10) est totalement réfléchi sur la glace du véhicule automobile (1).

6. Système de caméra selon la revendication 1, **caractérisé en ce que** la source de lumière (3) irradie de la lumière convergente ou divergente dans le conducteur optique (5).

7. Système de caméra selon la revendication 1, **caractérisé en ce que** la zone de captage de l'image de la zone extérieure (15) et du rayonnement de la source de lumière (3) sont situées l'une à côté de l'autre dans le plan image (8) de la caméra (2), sans intersection.

8. Système de caméra selon la revendication 1, **caractérisé en ce que** le champ visuel (14) de la fonction de captage d'image de la caméra (2), sur la glace du véhicule automobile (1), et la zone de réflexion totale, sur la face extérieure de la glace du véhicule automobile (1), s'intersectionnent, au moins partiellement.

9. Système de caméra selon la revendication 1, **caractérisé en ce que** la caméra (2) est focalisée sur un plan, qui est situé en dehors du véhicule automobile.

10. Système de caméra selon la revendication 1, **caractérisé en ce qu'**est prévu un capteur de lumière ambiante (9), indépendant de la caméra (2), qui, par l'intermédiaire du conducteur optique (5), capte la lumière d'une zone extérieure (15) de la glace du véhicule automobile (1), qui n'est pas située dans le champ visuel (14) de la fonction de captage d'image de la caméra (2).

11. Système de caméra selon la revendication 10, **caractérisé en ce que** le capteur de lumière ambiante (9) forme avec la source de lumière (3) un module et / ou est installé sur un support de circuit (4) commun.

12. Système de caméra selon la revendication 1, **caractérisé en ce qu'**au moins la source de lumière (3) et le conducteur optique (5) forment ensemble un module.

13. Système de caméra selon la revendication 1, **caractérisé en ce que** le conducteur optique (5) présente un indice de réfraction analogue à celui de la glace du véhicule automobile (1), et consiste préférentiellement en la même matière.

14. Système de caméra selon la revendication 1, **caractérisé en ce que** le conducteur optique (5) est exécuté d'une pièce avec la glace du véhicule automobile (1) et / ou avec des parties du système optique (12) de la caméra.

15. Système de caméra selon la revendication 1, **caractérisé en ce qu'**un dispositif d'évaluation redresse l'image saisie par la caméra (2).
